# DEMANDE DE BREVET EUROPEEN

(11) **EP 1 645 473 A1**
(43) Date de publication de la demande: **12.04.2006**
(21) Numéro de dépôt: 05292018.8
(22) Date de dépôt: 28.09.2005
(51) Int. Cl.: B60R 9/04

(54) **Toit renforcé de véhicule automobile**

(30) Priorité: 05.10.2004 FR 0410493
(71) Demandeur: COMPAGNIE PLASTIC OMNIUM, 69007 Lyon (FR)
(72) Inventeur: Bonneau, Eric, 38460 Saint Romain de Jalionas (FR)
(74) Mandataire: Remy, Vincent Noel Paul

(57) **Abrégé**

Ce toit (10) de véhicule automobile comporte une structure de toit (12), susceptible de recevoir un panneau de toit (14), et des rails longitudinaux (18), destinés à recevoir des barres de toit transversales. Les rails longitudinaux (18) sont agencés dans la structure de toit (12) de manière à assurer sa rigidité.

## Description

La présente invention concerne un toit renforcé de véhicule automobile.

Un véhicule automobile classique comporte parfois des barres de toit transversales pour le transport d'objets encombrants. Ces barres de toit transversales sont portées par des rails longitudinaux, qui sont donc rapportés uniquement de manière optionnelle sur le véhicule automobile.

Ainsi, on connaît déjà, dans l'état de la technique, un toit de véhicule automobile, du type comportant :
- une structure de toit, susceptible de recevoir un panneau de toit,
- des rails longitudinaux, destinés à recevoir des barres de toit transversales.

La structure de toit est conçue indépendamment des rails longitudinaux, puisqu'un véhicule automobile classique peut indifféremment comporter ou ne pas comporter de rails longitudinaux.

La structure de toit comporte donc des moyens de renfort susceptibles de renforcer suffisamment le toit du véhicule automobile même lorsque ce véhicule automobile ne comporte pas de rails longitudinaux.

Ainsi, lorsque les rails longitudinaux sont rapportés sur cette structure de toit, la rigidité de ces rails longitudinaux n'est pas utilisée pour la rigidité de la structure de toit.

L'invention a notamment pour but d'optimiser la rigidité d'un toit de véhicule automobile.

A cet effet, l'invention concerne un toit de véhicule automobile du type précité, caractérisé en ce que les rails longitudinaux sont agencés dans la structure de toit de manière à assurer sa rigidité.

Ainsi, la rigidité du toit selon l'invention est, au moins en partie, assurée par les rails longitudinaux, le véhicule pouvant toujours de manière optionnelle comporter des barres de toit transversales ou non.

Un toit de véhicule automobile selon l'invention peut en outre comporter l'une ou plusieurs des caractéristiques suivantes :
- le panneau de toit comporte au moins une partie transparente ou translucide ;
- la structure de toit est en matière plastique ;
- les rails longitudinaux sont moulés dans la structure de toit.

L'invention sera mieux comprise à la lecture de la description qui va suivre, donnée uniquement à titre d'exemple et faite en se référant aux dessins annexés dans lesquels :
- la figure 1 est une vue de dessus d'un toit de véhicule automobile selon un exemple de mode de réalisation de l'invention ;
- la figure 2 est une vue en coupe partielle du toit de véhicule automobile de la figure 1.

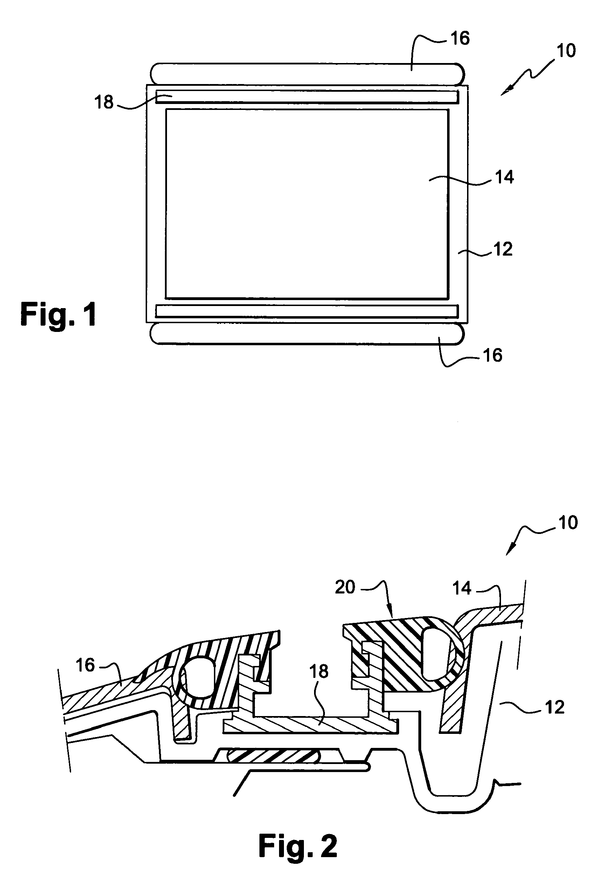

On a représenté sur les figures 1 et 2 un toit de véhicule automobile, désigné par la référence générale 10.

Le toit 10 comporte une structure de toit 12 sur laquelle est agencé un panneau de toit 14, éventuellement muni d'au moins une partie transparente ou translucide.

De manière optionnelle, la structure de toit 12 peut être réalisée en matière plastique.

Le toit 10 comporte en outre deux pièces 16 de carrosserie latérales, portées par la structure de toit 12.

Afin d'assurer la rigidité de la structure de toit 12, des rails 18 longitudinaux sont moulés dans cette structure de toit 12. Ces rails longitudinaux 18 sont notamment destinés à recevoir des barres de toit transversales pour le transport d'objets encombrants.

Sur la figure 2, le rail longitudinal 18 est muni de joints d'étanchéité 20, ayant notamment un rôle esthétique.

La rigidité du toit 10 étant assurée, au moins en partie, par les rails longitudinaux 18, on économise des moyens de rigidification complémentaires qui seraient superflus.

## Revendications

1. Toit (10) de véhicule automobile, du type comportant :
- une structure de toit (12), susceptible de recevoir un panneau de toit (14),
- des rails longitudinaux (18), destinés à recevoir des barres de toit transversales
**caractérisé en ce que** la structure de toit (12) est en matière plastique, les rails longitudinaux (18) étant agencés dans la structure de toit (12) de manière à assurer sa rigidité.

2. Toit (10) de véhicule automobile selon la revendication 1, dans lequel le panneau de toit (14) comporte au moins une partie transparente ou translucide.

3. Toit (10) de véhicule automobile selon la revendication 1 ou 2, dans lequel les rails longitudinaux (18) sont moulés dans la structure de toit (12).

4. Toit (10) de véhicule automobile selon l'une quelconque des revendications 1 à 3, dans lequel les rails longitudinaux (18) sont munis de joints d'étanchéité (20).
